Europäisches Patentamt

European Patent Office

Office européen des brevets

(19)

(11) Publication number: **0 076 039**

**A1**

(12) # EUROPEAN PATENT APPLICATION

(21) Application number: **82304554.7**

(22) Date of filing: **27.08.82**

(51) Int. Cl.³: **H 02 P 7/28**

(30) Priority: **31.08.81 US 298153**

(43) Date of publication of application:
**06.04.83 Bulletin 83/14**

(84) Designated Contracting States:
**DE FR GB IT NL**

(71) Applicant: **CAPAX ELECTRISCHE APPARATENFABRIEK B.V.**
**Rooyakkersstraat 3A P.O. Box 7017**
**NL-5605 JA Eindhoven(NL)**

(72) Inventor: **Gawron, Alex F.**
**1400 S. Vine Ave.**
**Park Ridge Illinois 60068(US)**

(72) Inventor: **Neumann, Peter N.**
**5258 W. Montrose Ave.**
**Chicago Illinois 60641(US)**

(74) Representative: **Fisher, Bernard et al,**
**Raworth, Moss & Cook 36 Sydenham Road**
**Croydon Surrey CR0 2EF(GB)**

(54) Speed control for power tools having a DC motor.

(57) This invention is suitable for use in a power tool having a DC motor and a manually operated mechanism for controlling the speed of the motor. An astable multivibrator (26) having a variable duty cycle is coupled to a FET (22) connected in series with the motor (12) to function as a series switching device. A potentiometer (21) coupled to said control mechanism is used to control the duty cycle of the series switching transistor (22) thereby controlling the average current and hence speed of the motor. A first circuit (28) may be connected between the transistor (22) and astable (26) to control the turn off time of the transistor (22) to minimize transient voltage spikes.

_Fig. 1_

EP 0 076 039 A1

This invention relates to a manually operable speed control for power tools with a DC motor.

This invention is particularly, although not exclusively, suited for use with a hand held battery powered tool such as a drill. Such tools typically utilize a rechargeable battery pack which supplies a relatively low DC voltage, such as 7.2 volts, and may be required to supply a maximum current of approximately 40 amperes. The low voltage and high currents which must be handled, switching transients, power dissipation, and the very limited space available in compact hand held tools illustrate some of the severe operating restrictions encountered when attempting to provide DC speed controls for such tools.

United States Patent No. 3,209,228 discloses an AC motor speed control wherein a manually operated trigger controls the wiper arm of a potentiometer to vary an RC circuit which determines the firing point of an SCR in series with the motor.

Electromechanical vibrators having a variable rate of vibration and a pair of contacts, which open and close with the vibrations, can be used to control DC motors. These contacts are connected in series with the DC motor to change the average current flowing thereby varying the speed of the motor. However, these devices have disadvantages such as contact bounce, arcing between the contacts, and a limited life because of mechanical wear.

It is an object of the present invention to provide a DC motor speed control capable of operating effectively under low voltage and high current conditons while occupying a minimum amount of space.

Another object of the present invention is to control the average current flowing through the DC motor by controlling the duty cycle of an astable multivibrator which in turn controls a switching element in series with the motor.

A more specific object of the present invention is to control the ON to OFF switching time of the series switching element to minimize potentially harmful voltage transients.

A further object of the present invention is to utilize a high gain series switching device, such as a field effect transistor, which can be driven directly from an integrated circuit astable.

This invention is suitable for use in a power tool having a DC motor and a manually operated mechanism for controlling the speed of the motor. An astable multivibrator having a variable duty cycle is coupled to a transistor, preferably an FET, connected in series with the motor to function as a series switching device. A means coupled to said control mechanism is used to control the duty cycle of the astable multivibrator which in turn controls the duty cycle of the series switching transistor thereby controlling the average current and hence speed of the motor. A first circuit means connected between the transistor and astable multivibrator is used to control the turn off time of the transistor to minimize transient voltage spikes. A diode connected in parallel with the motor is used to dissipate a substantial part of the inductive energy stored in the motor when the motor is turned off.

Figure 1 is a partially cut away elevational view of a hand held, battery powered drill incorporating the present invention.

Figure 2 is a schematic diagram of an embodiment of the present invention.

Figure 3 illustrates the motor voltage and current for a representative duty cycle as controlled by the present invention.

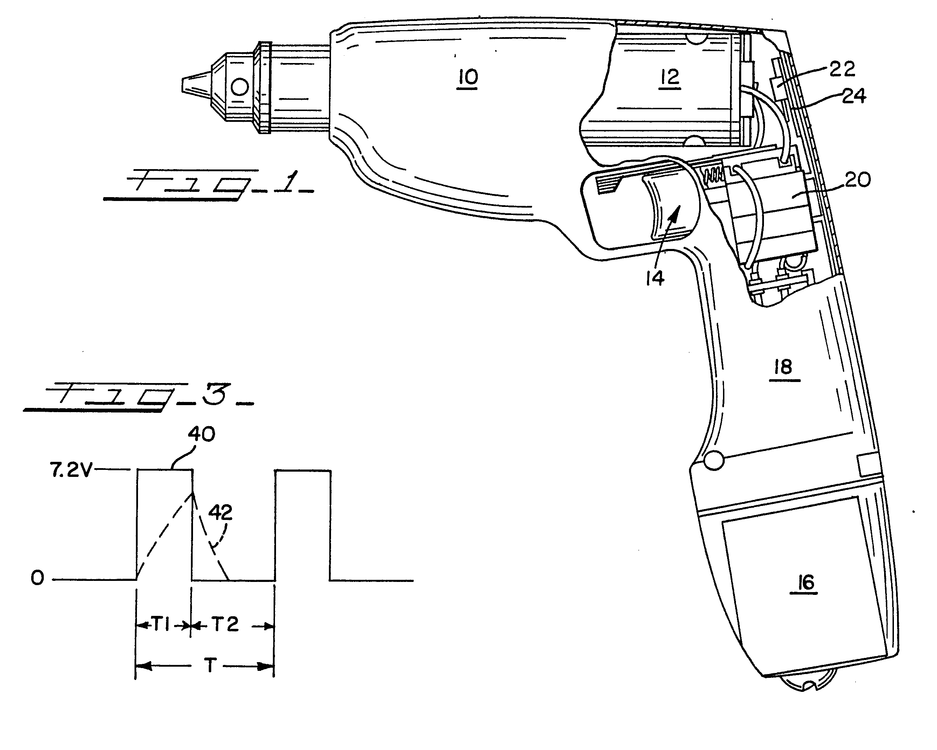

Although the present invention is particularly suited for use in the battery powered hand held drill shown in Figure 1, this invention has general application to power tools having a DC motor. For purposes of explanation the invention is described with respect to a drill.

The drill 10 includes a DC motor 12, a manually operable trigger mechanism 14 for controlling the speed of the motor, and a battery 16 which supplies power to the drill. The battery can be quickly removed from handle 18 for recharging. The circuitry of the present invention is mounted on a printed circuit board which may be contained within a switch housing 20 that includes the trigger control mechanism. A series switching device 22, to be described below, is mounted separately to a heat sink 24 for efficient heat transfer of the power dissipated by the switching device.

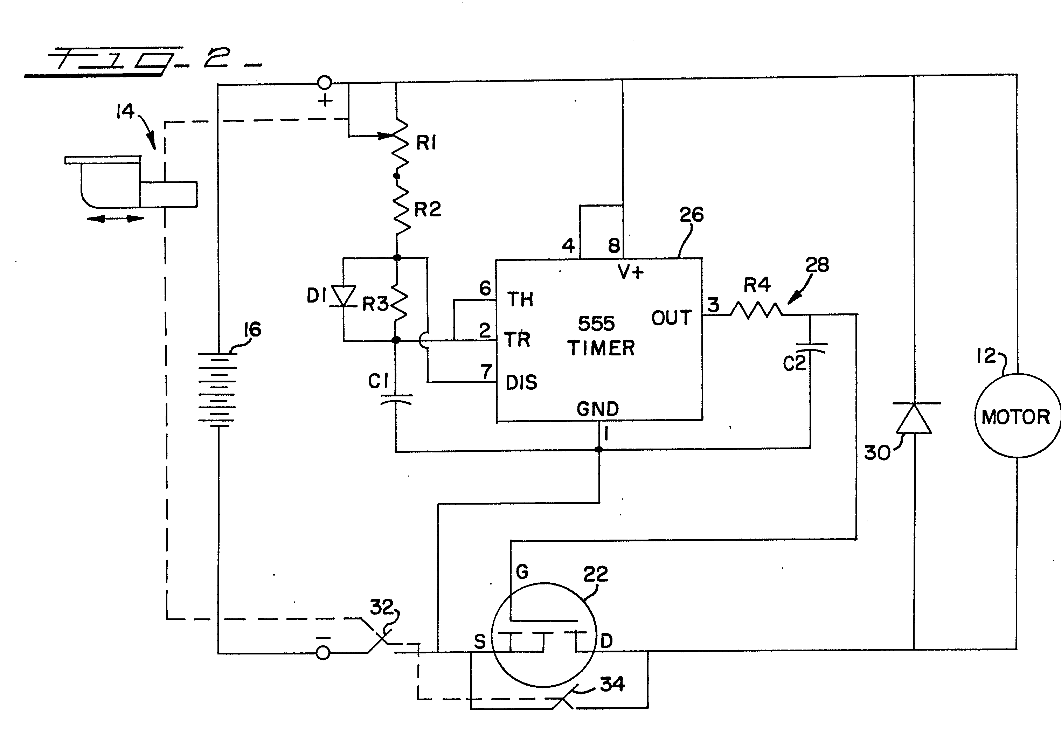

Now referring to Figure 2, an overview of the operation of the circuitry of the present invention will aid in understanding the detailed description. An integrated circuit 26 functions as an astable multivibrator whose frequency and duty cycle are controlled by the components associated with pins 2, 6, 7. The output of the astable multivibrator at pin 3 is coupled through delay circuit 28 to the gate of an FET 22 which has its drain and source connected in series with motor 12 and thus functions as the series switching device. Diode 30 is connected in parallel with the motor to aid in dissipating the energy stored in the motor during ON to OFF switching transitions. Battery 16 is connected in series with the motor, the FET, and series switch 32 which is controlled by the trigger mechanism 14 as indicated by the dashed line.

Switch 32 serves as a conventional ON/OFF switch which is open when the trigger is fully extended and which is closed when the trigger is retracted. A bypass switch 34, connected in parallel with the FET, is also controlled by the trigger mechanism such that it is normally open and is closed only near maximum retraction of the trigger to place a short circuit across the FET thereby applying the full power of the battery to the motor. The position of the trigger mechanism also controls the wiper arm of potentiometer R1 such that increasing retraction of the trigger produces increasing motor speed until bypass switch 34 is closed. Trigger control mechanisms capable of providing these functions are known in the art.

The duty cycle and frequency of the astable multivibrator varies in response to resistance changes of R1 causing a corresponding change in the ratio of ON to OFF times of the FET. This controls the average DC current flowing through motor 12 which in turn controls the speed of the motor. The delay circuit 28 is used to provide a more gradual ON to OFF transition switching time of the FET to reduce undesirable transient responses and to provide more time for diode 30 to

The integrated circuit 26 is preferably a 555 timer connected to function as an astable multivibrator, that is, the switching threshold (pin 6) is connected to the trigger input (pin 2) and the discharge output (pin 7) is connected to the associated components as shown.  When the astable multivibrator output (pin 3) is in its high state of approximately the battery voltage V, the FET is ON or fully conducting; when the output is in its low state or approximately zero volts, the FET is OFF or nonconducting.  The astable multivibrator's output is high during the time capacitor C1 is charging from one-third to two-thirds of battery voltage V and is low during the time capacitor C1 is discharging from two-thirds to one-third of V.

The ON time period T1    0.76 (R1 + R2) C1.  Although resistor R3 is in series with capacitor C1, diode D1 effectively bypasses resistor R3 during the charging cycle.  The OFF time T2    0.693 R3 C1.  During the discharge of the capacitor, the discharge output (pin 7) is grounded permitting C1 to discharge through resistor R3.  During the discharge time cycle, diode D1 is reverse biased and does not affect the time constant.  Therefore, it will be apparent that the ON and OFF times are independently controlled by the resistance of R1, R2 and R3.

The delay circuit 28 which consists of resistor R4 and capacitor C2, increases the switching transition times of the FET.  It is desirable to decrease the extremely rapid switching times of the output of the astable multivibrator in order to minimize the switching transients which would otherwise be present because of the generally inductive nature of motor 12.  If the FET were switched from ON to OFF extremely rapidly, the inductance of the motor would generate a large voltage spike or transient which could destroy or cause deterioration of the FET.

The FET must of course be selected to have sufficient power dissipation and DC current capabilities to handle the characteristics of the particular motor utilized. For example, if battery 16 consisted of six nickel-cadmium cells in series having a no load voltage of 7.2 volts (but not limited to a no load voltage of 7.2 volts) the current of a typical DC drill motor could range from 2 amps at no load, 8 amps at normal load, and 40 amps in a motor stalled condition. Thus, it will be apparent that the FET must be capable of handling substantial current. In such an application, the FET may consist of a model BUZ-10 available commercially from Siemens Company. The high gain of the FET as compared with a bipolar transistor allows the 555 integrated circuit to drive it without additional amplification.

When tested with a motor having characteristics as described above, an astable multivibrator frequency in the 1.0-1.5 KHZ range and an ON duty cycle between 0-40% was found to produce adequate motor control and to maintain the FET within safe current and power dissipation operating regions. The time constant of the RC network of the delay circuit 28, that is R4 C2, may be approximately 25 microseconds in such an application.

Figure 3 illustates an exemplary waveform of the voltage 40 across the motor and the current 42 flowing through the motor. The time periods T1 and T2 correspond to the ON and OFF time periods of the FET. The time period T of the waveform equals the sum of T1 and T2. When the FET is switched ON the voltage is applied very rapidly across the motor, but the current increases at a gradual rate because of the inductive nature of the motor. When the FET is switched OFF, the voltage across the motor drops rapidly, but the current decays at a much slower rate because of the inductive nature of the motor.

From the above it will be apparent that the present invention provides a DC motor speed control which requires few components and can be housed in a very small space inside a power tool.  Since this speed control has only a limited number of parts, it is very reliable and easy to manufacture.

Although a specific embodiment of the present invention has been described above and illustrated in the drawings, the scope of the present invention is defined by the claims appended hereto.

CLAIMS: *1* . 0076039

1. For use with a power tool of the type having a DC motor and adapted to be controlled by a manually operable mechanism for varying the speed of the motor, an improved speed control system comprising:

    (a)  an astable multivibrator having a variable duty cycle;

    (b)  a means coupling said astable multivibrator and said mechanism for controlling the duty cycle of the astable multivibrator; and

    (c)  a semi-conductor for being connected in series with said motor and coupled to said astable multivibrator for being turned ON and OFF in accordance with said duty cycle, whereby the average current which can flow through said motor is controlled thereby regulating the speed of the motor.

2. The system according to claim 1 wherein said semi-conductor is a field effect transistor.

3. The system according to claim 1 further comprising a diode for connection in parallel with said motor to dissipate a substantial part of the inductive energy stored in the motor when the motor is turned OFF thereby reducing the power dissipated in the semi-conductor.

4. The system according to claim 1 or 2 further comprising a means for protecting said semi-conductor against switching transients caused by said motor when said semi-conductor is turned OFF.

5.  The system according to claim 4 wherein said protecting means comprises a first circuit means connected between said transistor and astable multivibrator for controlling the time required for the transistor to change from ON to OFF wherein the transient voltage spike which would be produced by the motor, if rapidly turned OFF, is minimized thereby protecting the transistor.

6.  The system according to claim 5 wherein said first circuit means comprises a resistor and capacitor (RC) network.

7.  The system according to claim 2 wherein said astable multivibrator comprises an integrated circuit, the high power gain of the field effect transistor allowing said integrated circuit to directly drive the FET.

8.  The system according to claim 7 wherein said integrated circuit is a 555 timer.

9.  The system according to claim 1 wherein said mechanism for controlling the speed of the motor includes a mechanical switch connected in parallel with said semi-conductor so that when said switch is closed full power is applied to the motor.

10.  The system according to claim 2 wherein the duty cycle of the astable multivibrator, which corresponds to the percentage of time that said transistor is ON, is limited to the approximate range of 0-40%, thereby maintaining said transistor within its safe current handling and power dissipation limits.

11. In a hand held power tool of the type having a DC motor and a manually operable trigger mechanism for controlling the speed of the motor, the improvement comprising:

    (a)    an astable multivibrator having a variable duty cycle;

    (b)    a potentiometer coupled to said mechanism for controlling the duty cycle of the astable; and

    (c)    a field effect transistor connected in series with said motor and coupled to said astable multivibrator which turns said transistor ON and OFF in accordance with said duty cycle, whereby the average current which can flow through said motor can be manually controlled thereby regulating the speed of the motor.

12. The tool according to claim 11 further comprising a means for protecting said transistor against switching transients caused by said motor when said transistor is turned OFF.

13. The tool according to claim 12 wherein said protecting means comprises a first circuit means connected between said transistor and astable multivibrator for controlling the time required for the transistor to change from ON to OFF wherein the transient voltage spike which would be produced by the motor, if rapidly turned OFF, is minimized thereby protecting the transistor.

_Fig_1_

10

12

22

24

20

14

18

16

_Fig_3_

40

7.2V

42

0

T1

T2

T

FIG-2-

**EUROPEAN SEARCH REPORT**

0076039
Application number

EP 82 30 4554.7

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | TOUTE L'ELECTRONIQUE, No. 460, January 1981, Paris C. VERBEEK "Les MOS de puissance pour la commande des moteurs" pages 47 to 50 | | H 02 P 7/28 |
| Y | * page 47 to page 48, column 1 * | 1,3,7,11 | |
| X | * fig. 1 * | 2 | |
| | -- | | |
| | GB - A - 1 562 252 (LUCAS INDUSTRIES LTD.) | | TECHNICAL FIELDS SEARCHED (Int.Cl. ³) |
| Y | * claim 1; page 1, line 49 to page 2, line 12; fig. * | 1,3,11 | |
| A | * claim 5 * | 4-6 | B 23 B 45/00 |
| | -- | | H 02 P 7/28 |
| Y | ELECTRONIC DESIGN, Vol. 29, No. 7 31 March 1981, Denville H.L. MORGAN "555 timer provides PWM drive for low-cost dc motor control" pages 193, 194, 196 * complete document * | 1,7,8,11 | |
| | -- | | |
| A | WIRELESS WORLD, Vol. 85, No. 1520 April 1979, London J.D. STUMBLES "Motor speed controller" pages 83 to 86 * fig. 2 * | 1,3,8 | CATEGORY OF CITED DOCUMENTS |
| | -- | | |
| A | GB - A - 1 413 476 (C.A.V. LTD.) * claims 1, 3, 4; fig. 1 * | 1,3 | |
| | ---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search Berlin | Date of completion of the search 23-11-1982 | Examiner FAORO | |